(19) Europäisches Patentamt
European Patent Office
Office européen des brevets

(11) **EP 3 840 390 A1**

(12) **EUROPEAN PATENT APPLICATION**
published in accordance with Art. 153(4) EPC

(43) Date of publication:
**23.06.2021 Bulletin 2021/25**

(51) Int Cl.:
*H04N 21/2343* (2011.01)    *H04N 21/2187* (2011.01)
*H04N 19/40* (2014.01)    *H04L 29/06* (2006.01)

(21) Application number: **20719917.5**

(22) Date of filing: **12.02.2020**

(86) International application number:
**PCT/CN2020/074966**

(87) International publication number:
**WO 2021/088263 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **08.11.2019 CN 201911088745**

(71) Applicant: **Wangsu Science & Technology Co., Ltd.**
**Shanghai 200030 (CN)**

(72) Inventors:
• **CHEN, Jie**
**Shanghai 200030 (CN)**
• **ZHENG, Jianwen**
**Shanghai 200030 (CN)**

(74) Representative: **Würmser, Julian**
**Meissner Bolte Patentanwälte**
**Rechtsanwälte Partnerschaft mbB**
**Postfach 86 06 24**
**81633 München (DE)**

(54) **METHOD AND DEVICE FOR CONTROLLING VIDEO TRANSCODING CODE RATE**

(57)    The present disclosure discloses a method and device for controlling a video transcoding code rate, which belongs to video processing technologies. The method includes: periodically detecting an average input code rate of a target live stream in the process of transcoding the target live stream (101); determining a code rate to be set according to the average input code rate and a preset standard code rate corresponding to the target live stream (102); and transcoding the target live stream based on the code rate to be set (103).

FIG. 1

EP 3 840 390 A1

**Description**

**CROSS REFERENCE TO RELATED APPLICATIONS**

The present disclosure refers to Chinese patent application No. 201911088745.7, titled "METHOD AND DEVICE FOR CONTROLLING VIDEO TRANSCODING CODE RATE", filed November 08, 2019, which is incorporated by reference herein in its entirety.

**TECHNICAL FIELD**

The present disclosure relates to video processing technologies and in particular to a method and a device for controlling a video transcoding code rate.

**BACKGROUND**

Watching live broadcasts is a mainstream form of entertainment at present, and a large number of user terminals are installed with a live broadcast client. Through the live broadcast client, users may play a live stream provided by the live broadcast platform. Generally, the live streams pushed by an anchor end have higher resolution, frame rate and code rate. However, in order to adapt to different network bandwidths, terminal processing capabilities and user needs, the live broadcast platform often needs to transcode the live stream on the server.

The background server of the live broadcast platform may generate multiple transcoding tasks according to different transcoding rules after pulling a new live stream from a live source, and then create a corresponding transcoding process for each of the transcoding tasks. In this way, the steps of parsing, transcoding, and encapsulating the live stream may be implemented through transcoding threads in the transcoding process. Hereafter, the background server may push a corresponding live stream to the user terminal after receiving a live broadcast playing request from the user terminal for the live stream under a certain transcoding rule.

During the implementation of the present disclosure, the inventors find that the existing technology at least has the following problems. In the process of live broadcasting, there is a high probability of code rate fluctuation in the live stream pushed by the anchor end due to the influence of a pushing streaming strategy and picture complexity. Therefore, when the background server is transcoding, the code rate of the live stream may be wasted or picture quality may be degraded if the transcoding is performed according to a specific code rate set manually. And the background server may transcode the live stream according to the picture complexity of each of the video frame by default if the specific code rate is not set, in this case, the code rate of the live stream obtained by the transcoding may fluctuate greatly, so it is easy to cause the stutter of the video playing on the user terminal and the poor quality of the live broadcast service.

**SUMMARY**

In order to solve the problems in the existing technologies, embodiments of the present disclosure provide a method and device for controlling a video transcoding code rate, and the technical solutions are as follows. In a first aspect, a method for controlling a video transcoding code rate is provided, and the method includes:

> periodically detecting an average input code rate of a target live stream in the process of transcoding the target live stream;
> determining a code rate to be set according to the average input code rate and a preset standard code rate corresponding to the target live stream; and
> transcoding the target live stream based on the code rate to be set.

In a second aspect, a device for controlling a video transcoding code rate is provided, and the device includes:

> an input detection module, configured to periodically detect an average input code rate of a target live stream in the process of transcoding the target live stream;
> a code rate calculation module, configured to determine a code rate to be set according to the average input code rate and a preset standard code rate corresponding to the target live stream; and
> a real-time transcoding module, configured to transcode the target live stream based on the code rate to be set.

In a third aspect, a background server is provided, and the background server includes a processor and a memory. The memory stores at least one instruction, at least one program, a code set or an instruction set, and the at least one instruction, the at least one program, the code set or the instruction set is loaded and executed by the processor to perform the method for controlling the video transcoding code rate according to the first aspect.

In a fourth aspect, a computer readable storage medium is provided, where the storage medium stores at least one instruction, at least one program, a code set, or an instruction set, and the at least one instruction, the at least one program, the code set or the instruction set is loaded and executed by a processor to perform the method for controlling the video transcoding code rate according to the first aspect.

The technical solutions provided by the embodiments of the present disclosure have the following beneficial effects. In the embodiments of the present disclosure, the average input code rate of the target live stream is periodically detected in the process of transcoding the target live stream; the code rate to be set is determined based on the average input code rate and the preset standard code rate corresponding to the target live stream; the target live stream is transcoded based on the code rate to be set. In this way, the transcoding code rate is regularly adjusted on the basis of the input code rate and the preset standard code rate of the live stream when transcoding the live stream, which may maximally ensure that the transcoding code rate is basically the same as the input code rate and avoid degradation of picture quality or stutter of the live broadcast caused by a too high or too low transcoding code rate, thereby improving the quality of the live broadcast service.

## BRIEF DESCRIPTION OF THE DRAWINGS

In order to illustrate the technical solutions in the embodiments of the present disclosure more clearly, the accompanying drawings used in the description of the embodiments are briefly described below. It is apparent that the drawings described below are merely some embodiments of the present disclosure. For those of ordinary skills in the art, other drawings may also be obtained according to these drawings without any creative work.

FIG. 1 is a flowchart of a method for controlling a video transcoding code rate provided in an embodiment of the present disclosure;

FIG. 2 is a schematic structural diagram of a device for controlling a video transcoding code rate provided in an embodiment of the present disclosure;

FIG. 3 is a schematic structural diagram of a background server provided in an embodiment of the present disclosure.

## DETAILED DESCRIPTION

In order to clarify the objectives, the technical solutions and the advantages of the present disclosure, the embodiments of the present disclosure are described in detail in combination with the accompanying drawings hereafter.

An embodiment of the present disclosure provides a method for controlling a video transcoding code rate, and the execution subject of the method may be a background server of a live broadcast platform. Herein, the background server may have a video transcoding function, and may transcode a live video after receiving a live stream and then provide the transcoded live video to the outside. The live broadcast platform may be provided with multiple background servers. Each of the background servers may be used to perform multiple transcoding tasks for different live streams, and each of video streams may correspond to the multiple transcoding tasks according to the transcoding requirements. The above background server may include a processor, a memory, and a transceiver. The processor may be used to process the live stream transcoding in the following process. The memory may be used to store the data required and generated in the following process. The transceiver may be used to receive and send related data in the following process. The method for controlling the video transcoding code rate disclosed in this embodiment may also be applied to an on-demand video, and the specific process is similar to that of the live video.

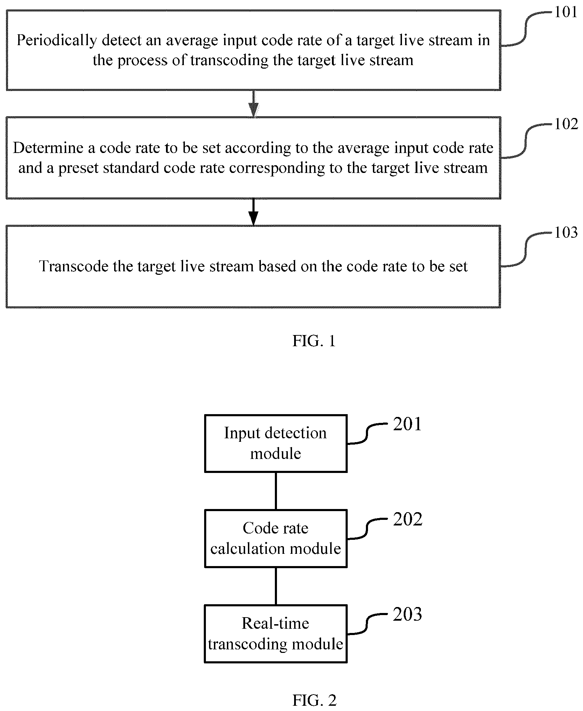

A processing flow shown in FIG. 1 is described in detail in combination with a specific embodiment, the contents of which may be as follows. In step 101, an average input code rate of a target live stream is periodically detected in the process of transcoding a target live stream.

During implementation, a data collection component of an anchor end may collect pictures, sounds, and the like used to generate a live video in real time after the anchor starts to broadcast in a live studio, then a video production component may generate a corresponding live video, and a video transmission component may push the live stream to a background server of a live broadcast platform in real time. In this way, after obtaining a certain live stream (taking the target live stream as an example), the background server may generate transcoding tasks corresponding to the target live stream according to a transcoding rule preset by the live broadcast platform, and create a transcoding process for each of the transcoding tasks. Hereafter, the background server may create a main thread in the transcoding process, and perform the transcoding processing of the target live stream through the main thread according to the information such as encapsulation formats, audio and video parameters, encoding and decoding parameters, and the like carried by the transcoding tasks. At the initial stage of the transcoding, the background server may transcode the target live stream according to a default code rate that is set manually, or may automatically select the code rate to transcode the target live stream according to the picture complexity of a detected live stream. In the subsequent process of the transcoding, the background server may continuously adjust the transcoding code rate according to the method disclosed in this embodiment.

During the process of transcoding the target live stream, the background server may periodically detect the average input code rate of the target live stream, for example, detecting one time every 10 seconds. Specifically, the background server may store a data packet in a global queue when receiving the data packet of the target live stream. In this way, the background server may calculate the average input code rate of the target live stream according to an amount of the data stored in the global queue when detecting the average input code rate. It may be understood that the background server may only store data amount information of the data packet into the global queue, so as to reduce the occupation of the device storage space. It should be noted that the background server may specially set a detection thread in the transcoding process to perform a detection processing of the average input code rate of the target live stream described above.

In step 102, a code rate to be set is determined according to the average input code rate and a preset standard code rate corresponding to the target live stream.

During implementation, the background server may set a corresponding preset standard code rate for live streams with different video parameters. If a real-time code rate of the live stream that has been transcoded is lower than the preset standard code rate, picture quality of the live picture may be degraded and play effect may be affected to a certain extent. If the real-time code rate is continually higher than the preset standard code rate, the above situation may be avoided with a high probability. Therefore, the background server may first determine the preset standard code rate corresponding to the target live stream after detecting the average input code rate of the target live stream, and then may determine a reference code rate when transcoding the target live stream in the next period, i.e., the code rate to be set, according to the average input code rate and the preset standard code rate described above.

In one embodiment, the preset standard code rate corresponding to the target live stream may be calculated according to video parameters of the target live stream and the video parameters of a standard live stream.

Herein, the standard live stream may be the live stream with the lowest code rate, which meets a specified resolution and frame rate and may be smoothly played by a user terminal without significant degradation of the picture quality. And the video parameters at least include the resolution, the frame rate and the code rate.

During implementation, technicians may set the video parameters such as the resolution, the frame rate, and the code rate of the standard live stream on the background server. Furthermore, the background server may calculate the preset standard code rate corresponding to the target live stream according to the video parameters of the target live stream and the video parameters of the standard live stream. For example, the standard live stream may select the resolution to be "1920 × 1080", the frame rate to be "30fps", and the code rate to be "2M/s". Assuming that the resolution of the target live stream is W × H (W for width , H for height) and the frame rate is F, the preset standard code rate may be calculated according to the following linear algorithm: $M_{line}$: $M_{line}$=(W × H × F)/(1920 × 1080 × 30) × 2 × 1024 × 1024, or the preset standard code rate may be calculated according to the following logarithmic algorithm: $M_{log}$: $M_{log}$=log(W × H × F)/log(1920 × 1080 × 30) × 2 × 1024 × 1024. Of course, the calculation method of the preset standard code rate may also use other algorithms, which is not limited in this embodiment. For example, the background server may use multiple algorithms to calculate the preset standard code rate at the same time, and use multiple calculation results at the same time. The usage may be specifically explained in the subsequent related content. In this way, the preset standard code rate of the target live stream may be calculated intuitively and accurately by comparing the video parameters of the target live stream and the video parameters of the standard live stream.

In one embodiment, a picture fluctuation degree of the live stream may be considered at the same time when calculating the preset standard code rate, and the corresponding processing may be as follows: calculating the preset standard code rate corresponding to the target live stream according to the video parameters of the target live stream and the video parameters of the standard live stream as well as the picture fluctuation degree of the target live stream.

During implementation, the background server may first determine the picture fluctuation degree of the target live stream when calculating the preset standard code rate corresponding to the target live stream. Specifically, the picture fluctuation degree of the target live stream may be determined according to a type of live broadcast of the target live stream. For example, the picture fluctuation degree of the host live broadcast is weak while the picture fluctuation degree of the sports live broadcast is strong. Or the background server may periodically detect the picture fluctuation degree of the target live stream according to multi-frame latest live pictures that have been transcoded in the process of transcoding the target live stream. Hereafter, the background server may calculate the preset standard code rate corresponding to the target live stream according to the video parameters of the target live stream and the video parameters of the standard live stream as well as the picture fluctuation degree of the target live stream. Specifically, a picture fluctuation coefficient S may be introduced into the calculation formula, the higher the picture fluctuation degree the larger the picture fluctuation coefficient S, and the lower the picture fluctuation degree the smaller the picture fluctuation coefficient S. Therefore, the calculation formulas of $M_{line}$ and $M_{log}$ may be respectively as follows:

$$M_{line} = (W \times H \times F) / (1920 \times 1080 \times 30) \times 2 \times 1024 \times 1024 \times S$$

$$M_{log} = \log (W \times H \times F) / \log (1920 \times 1080 \times 30) \times 2 \times 1024 \times 1024 \times S$$

In this way, the live streams with different picture fluctuation degrees may be more accurately distinguished by introducing the picture fluctuation coefficient S into the calculation formula when calculating the preset standard code rate, so that the preset standard code rate is more conform to a real code rate requirement of the live stream.

In one embodiment, a detected average input code rate of the target live stream may include a total average input code rate and a periodic average input code rate within a current period. Accordingly, the processing in step 102 may be as follows: setting the code rate to be set to a maximum value of the preset standard code rate and the total average input code rate, if the periodic average input code rate is less than the preset standard code rate corresponding to the target live stream; and setting the code rate to be set to a product of the periodic average input code rate and a preset code rate control coefficient if the periodic average input code rate is not less than the preset standard code rate corresponding to the target live stream.

During implementation, after detecting the total average input code rate of the target live stream and the periodic average input code rate within the current period, the background server may first determine a magnitude relationship between the periodic average input code rate and the preset standard code rate corresponding to the target live stream. It is indicated that an input code rate of the target live stream within the current period is too low if the periodic average input code rate is less than the preset standard code rate, and the background server may select a maximum value of the preset standard code rate and the total average input code rate as the code rate to be set. And it is indicated that the input code rate of the target live stream within the current period is normal if the periodic average input code rate is not less than the preset standard code rate corresponding to the target live stream, and the background server may multiply the periodic average input code rate by the preset code rate control coefficient and then use the product of them as the code rate to be set. It should be noted that the preset code rate control coefficient described above may be empirical data summarized by the technicians with reference to the transcoding process of the live streams in the past, and a specific value may be manually configured. In this way, the periodic average input code rate is compared with the preset standard code rate. On the one hand, a transcoding code rate may be ensured to be as consistent as possible with the input code rate of the live stream, so as to avoid waste of the code rate of the live stream or degradation of the picture quality. On the other hand, great fluctuation of the code rate of the live stream caused by the low input code rate of the live stream may be avoided, so as to ensure smooth playing of the live broadcast on the user terminal. It should be noted that a minimum value of multiple preset standard code rates may be selected in this step if the background server uses the multiple algorithms to calculate the multiple preset standard code rates, and then the minimum value may be used to set the code rate to be set.

In one embodiment, affected by factors such as network connection, data cache, and the like, the transcoding code rate may be set in different ways at the early and middle stages of the transcoding. Correspondingly, the processing in step 103 may be as follows: determining the code rate to be set according to the average input code rate and the preset standard code rate corresponding to the target live stream, if a transcoding duration of the target live stream is greater than a preset duration; and determining the code rate to be set according to the average input code rate and the preset standard code rate corresponding to the target live stream as well as an input code rate peak of the target live stream within the current period, if the transcoding duration of the target live stream is not greater than the preset duration.

During implementation, during the initial stage when the background server receives the target live stream and transcodes the target live stream, the input code rate of the target live stream may be excessively low due to the influence of the processing such as network connection between devices, live stream information cache, and the like. Therefore, the background server may determine the code rate to be set in different ways according to the transcoding duration of the target live stream. Specifically, the background server may first determine the magnitude relationship between the average input code rate and the preset standard code rate corresponding to the target live stream if the transcoding duration of the target live stream is no longer than the preset duration. And the average input code rate may be set as the code rate to be set if the average code rate is greater than the preset standard code rate. Otherwise, the code rate to be set may be set to the maximum value of the preset standard code rate and the input code rate peak of the target live stream within the current period. It should be noted that the maximum value of the multiple preset standard code rates may be selected in the above process if the background server uses the multiple algorithms to calculate the multiple preset standard code rates, and then the maximum value may be used to set the code rate to be set. However, the background server may determine the code rate to be set according to the average input code rate and the preset standard code rate corresponding to the target live stream if the transcoding duration of the target live stream is longer than the preset duration, and a specific processing may refer to the above description. In this way, different manners of setting the code rate are used for the initial stage of the transcoding, which may effectively reduce the influence of factors such as network connection, data cache, and the like on the input code rate of the live stream, thereby avoiding the waste of the code rate of the live stream or the degradation of the picture quality caused by the low transcoding code rate.

In one embodiment, a current bandwidth load state of a whole network may also be taken into account when setting the transcoding code rate of the live stream. Accordingly, the processing in step 102 may be as follows: determining the code rate to be set according to the average input code rate and the preset standard code rate corresponding to the target live stream as well as the bandwidth load state of the whole network at a current time.

During implementation, the background server may obtain the bandwidth load state of the whole network at the current time or may detect a data transmission state of the network link in real time to determine the bandwidth load state of the whole network in the process of transcoding the target live stream. Herein, an obtaining method may be judging whether the current time belongs to a preset peak period of traffic or valley period of traffic. Hereafter, the background server may determine the code rate to be set according to the average input code rate and the preset standard code rate corresponding to the target live stream as well as the bandwidth load state of the whole network at the current time. Specifically, the bandwidth load state of the whole network may be represented in the form of a bandwidth load coefficient when determining the code rate to be set, that is, the bandwidth load coefficient may be multiplied on the basis of the original formula. Herein, the transcoding code rate of the live stream may be appropriately reduced if the bandwidth load state of the whole network is relatively high, so as to ensure the smoothness of the live stream transmission, thus a smaller bandwidth load coefficient may be selected. Conversely, the transcoding code rate of the live stream may be appropriately increased if the bandwidth load state of the whole network is relatively low, so as to improve the picture quality and the play effect of the live stream, thus a larger bandwidth load coefficient may be selected.

In step 103, the target live stream is transcoded based on the code rate to be set.

During implementation, the code rate of an encoder in a main thread may be adjusted based on the code rate to be set after the background server determines the code rate to be set, so that the transcoding of the target live stream may be continued.

In one embodiment, the transcoding code rate is reset only when a difference between the code rate to be set and a set code rate is too large. Correspondingly, the processing in step 103 may be as follows: transcoding the target live stream according to the code rate to be set if the difference between the code rate to be set and the set code rate of the target live stream is greater than a preset threshold; otherwise, transcoding the target live stream according to the set code rate.

During implementation, the background server may compare the code rate to be set with the set code rate of the target live stream after determining the code rate to be set. If the difference between the two is greater than the preset threshold, the background server may update the transcoding code rate of the target live stream to the code rate to be set, and then transcode the target live stream according to the code rate to be set; and if the difference between the two is not greater than the preset threshold, the background server may keep the current transcoding code rate of the target live stream unchanged, that is, the transcoding of the target live stream may be continued according to the above set code rate. In this way, the code rate to be set is compared with the set code rate before resetting the transcoding code rate, which may prevent the background server from frequently changing the transcoding code rate in a small range, thereby saving equipment processing resources of the background server.

In one embodiment, the code rate to be set may be compared with the transcoding output code rate. And the transcoding code rate is reset when the difference between the two is too large. Correspondingly, the processing in step 103 may be as follows: counting a periodic average output code rate of the target live stream within a current period; and transcoding the target live stream according to the code rate to be set if the difference between the code rate to be set and the period average output code rate is greater than a preset threshold, otherwise, transcoding the target live stream according to the set code rate.

During implementation, the background server may periodically detect the periodic average output code rate of the target live stream in the process of transcoding the target live stream, for example, detecting one time every 10 seconds. Similar to detecting the average input code rate, the background server may count a data amount of a data packet output by transcoding at a certain interval, and then calculate the periodic average output code rate within the current period. It should be noted that the background server may specially set a detection thread in the transcoding process to perform the above detection process of the periodic average output code rate of the target live stream. Hereafter, the background server may compare the code rate to be set with the periodic average code rate. If the difference between the two is greater than the preset threshold, the background server may update the transcoding code rate of the target live stream to the code rate to be set, and then transcode the target live stream according to the code rate to be set. And if the difference between the two is not greater than the preset threshold, the background server may keep the current transcoding code rate of the target live stream unchanged, that is, the transcoding of the target live stream may be continued according to the above set code rate. In this way, compared with the set code rate, the periodic average output code rate may reflect an actual transcoding code rate of the target live stream more accurately. The comparison between the code rate to be set and the period average output code rate may not only prevent the background server from changing the transcoding code rate frequently in a small range, so as to save the equipment processing resources of the background server, but also avoid the need to change the transcoding code rate repeatedly due to the low value of the set code rate.

In one embodiment, the detection period of the average input code rate may be adjusted according to the fluctuation of the input code rate of the live stream. The corresponding processing may be as follows: recording a real-time input code rate of the target live stream; shortening the detection period of the average input code rate according to a fluctuation amplitude if the fluctuation range of the real-time input code rate is greater than a preset fluctuation threshold, otherwise, extending the detection period of the average input code rate.

During implementation, the background server may record the real-time input code rate of the target live stream in the process of transcoding the target live stream. Specifically, the real-time input code rate may be calculated according to the amount of data input into the encoder within a unit duration, and the unit duration may be selected to 1 second or shorter. Next, the background server may calculate the fluctuation amplitude of the real-time input code rate according to a recorded content. The detection period of the average input code rate may be shortened according to the fluctuation amplitude if the fluctuation amplitude is greater than the preset fluctuation threshold; while the detection period of the average input code rate may be extended if the fluctuation amplitude is not greater than the preset fluctuation threshold. Specifically, the fluctuation amplitude may be represented in the form of a fluctuation coefficient, and the detection period may be changed through multiplying the detection period of the average input code rate by the fluctuation coefficient. For example, the fluctuation coefficient is greater than 1 when the fluctuation amplitude is higher, and the value of the fluctuation coefficient is larger. The fluctuation coefficient is less than 1 when the fluctuation amplitude is lower, and the value of the fluctuation coefficient is smaller. In this way, the detection period of the input code rate may be changed adaptively according to the fluctuation of the real-time input code rate of the live stream, which may improve the detection accuracy of the average input code rate, thereby making the control of the transcoding code rate more reasonable and accurate.

In the embodiment of the present disclosure, the average input code rate of the target live stream is periodically detected in the process of transcoding the target live stream; the code rate to be set is determined according to the average input code rate and the preset standard code rate corresponding to the target live stream; and the target live stream is transcoded based on the code rate to be set. In this way, the transcoding code rate is regularly adjusted on the basis of the input code rate of the live stream and the preset standard code rate when transcoding the live stream, which may maximally ensure that the transcoding code rate is basically the same as the input code rate and avoid the degradation of the picture quality or the stutter of the live broadcast caused by a too high or too low transcoding code rate, thereby improving the quality of live broadcast services.

Based on the same technical concept, an embodiment of the present disclosure further provides a device for controlling a video transcoding code rate. As shown in FIG. 2, the device includes:

an input detection module 201, configured to periodically detect an average input code rate of a target live stream in the process of transcoding the target live stream;
a code rate calculation module 202, configured to determine a code rate to be set according to the average input code rate and a preset standard code rate corresponding to the target live stream; and
a real-time transcoding module 203, configured to transcode the target live stream based on the code rate to be set.

In one embodiment, the code rate calculation module 202 is configured to:

determine the code rate to be set according to the average input code rate and the preset standard code rate corresponding to the target live stream, if a transcoding duration of the target live stream is greater than a preset duration; or
determine the code rate to be set according to the average input code rate and the preset standard code rate corresponding to the target live stream as well as an input code rate peak of the target live stream within a current period, if the transcoding duration of the target live stream is not greater than the preset duration.

In one embodiment, the average input code rate includes a total average input code rate and a periodic average input code rate within a current period;
the code rate calculation module 202 is configured to:

set the code rate to be set to a maximum value of the preset standard code rate and the total average input code rate, if the periodic average input code rate is less than the preset standard code rate corresponding to the target live stream; or
set the code rate to be set to a product of the periodic average input code rate and a preset code rate control coefficient, if the periodic average input code rate is not less than the preset standard code rate corresponding to the target live stream.

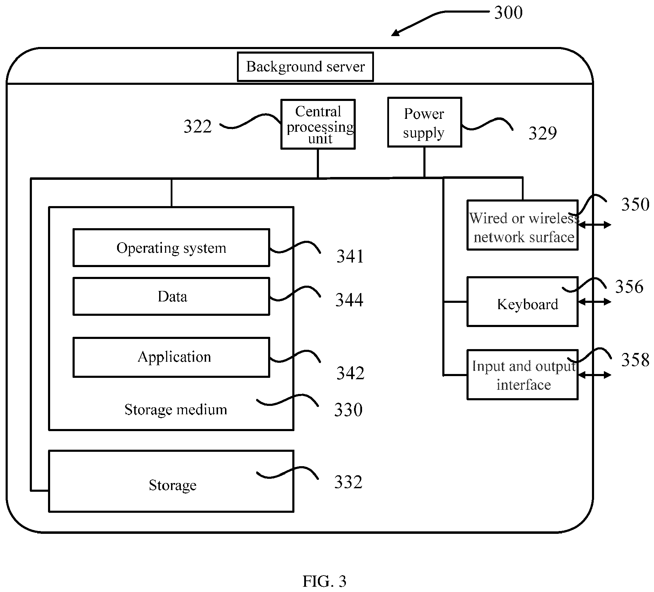

FIG. 3 is a schematic structural diagram of a background server provided in an embodiment of the present disclosure. The background server 300 may have relatively large differences due to different configurations or performances, and may include one or more central processing units 322 (e.g., one or more processors) and a memory 332, one or more storage medium 330 (e.g., one or more mass storage devices) storing an application 342 or data 344. Herein, the memory 332 and the storage medium 330 may be in the form of temporary storage or persistent storage. The program stored in the storage medium 330 may include one or more modules (not shown in the figure), and each module may include a series of instruction operations to the background server 300. In this embodiment, the central processing unit 322 may be configured to communicate with the storage medium 330 and execute the series of instruction operations in the storage medium 330 on the background server 300.

The background server 300 may also include one or more power sources 329, one or more wired or wireless network interfaces 350, one or more input and output interfaces 358, one or more keyboards 356, and/or, one or more operating systems 341 such as Windows Server, Mac OS X, Unix, Linux, FreeBSD, and the like.

The background server 300 may include a memory, and one or more programs, where one or more programs are stored in the memory and configured to be executed by one or more processors, and the one or more programs contain the instruction for controlling the video transcoding code rate.

Those of ordinary skills in the art may understand that all or some steps in the above embodiments may be implemented by hardware or by instructing relevant hardware through a program. The program may be stored in a computer readable storage medium and the storage medium mentioned above may be a read-only memory, a magnetic disk, an optical disk or the like.

Those described above are merely some embodiments of the present disclosure, which are not intended to limit the present disclosure. Any modification, equivalent replacement and improvement within the spirit and principle of the present disclosure shall be included in the protection scope of the present disclosure.

**Claims**

1. A method for controlling a video transcoding code rate, comprising:

   periodically detecting an average input code rate of a target live stream in the process of transcoding the target live stream;
   determining a code rate to be set according to the average input code rate and a preset standard code rate corresponding to the target live stream; and
   transcoding the target live stream based on the code rate to be set.

2. The method according to claim 1, wherein periodically detecting the average input code rate of the target live stream comprises:

   storing a data packet in a global queue when receiving the data packet of the target live stream; and
   periodically determining the average input code rate of the target live stream according to an amount of data stored in the global queue.

3. The method according to claim 1, further comprising:
   calculating the preset standard code rate corresponding to the target live stream according to video parameters of the target live stream and the video parameters of a standard live stream, wherein the video parameters at least include a resolution, a frame rate, and a code rate.

4. The method according to claim 3, wherein calculating the preset standard code rate corresponding to the target live stream according to the video parameters of the target live stream and the video parameters of the standard live stream comprises:
   calculating the preset standard code rate corresponding to the target live stream according to the video parameters of the target live stream and the video parameters of the standard live stream as well as a picture fluctuation degree of the target live stream.

5. The method according to claim 1, wherein determining the code rate to be set according to the average input code rate and the preset standard code rate corresponding to the target live stream comprises:

determining the code rate to be set according to the average input code rate and the preset standard code rate corresponding to the target live stream, if a transcoding duration of the target live stream is greater than a preset duration; or

determining the code rate to be set according to the average input code rate and the preset standard code rate corresponding to the target live stream as well as an input code rate peak of the target live stream within a current period, if the transcoding duration of the target live stream is not greater than the preset duration.

6. The method according to claim 1 or 5, wherein the average input code rate comprises a total average input code rate and a periodic average input code rate within a current period;

determining the code rate to be set according to the average input code rate and the preset standard code rate corresponding to the target live stream comprises:

setting the code rate to be set to a maximum value of the preset standard code rate and the total average input code rate, if the periodic average input code rate is less than the preset standard code rate corresponding to the target live stream; and

setting the code rate to be set to a product of the periodic average input code rate and a preset code rate control coefficient, if the periodic average input code rate is not less than the preset standard code rate corresponding to the target live stream.

7. The method according to claim 1, wherein determining the code rate to be set according to the average input code rate and the preset standard code rate corresponding to the target live stream comprises:

determining the code rate to be set according to the average input code rate and the preset standard code rate corresponding to the target live stream as well as a bandwidth load state of a whole network at a current time.

8. The method according to claim 1, wherein transcoding the target live stream based on the code rate to be set comprises:

transcoding the target live stream according to the code rate to be set if a difference between the code rate to be set and a set code rate of the target live stream is greater than a preset threshold, otherwise, transcoding the target live stream according to the set code rate.

9. The method according to claim 1, wherein transcoding the target live stream based on the code rate to be set comprises:

counting a periodic average output code rate of the target live stream within a current period; and

transcoding the target live stream according to the code rate to be set if a difference between the code rate to be set and the periodic average output code rate is greater than a preset threshold, otherwise, transcoding the target live stream according to a set code rate.

10. The method according to claim 1, further comprising:

recording a real-time input code rate of the target live stream; and

shortening a detection period of the average input code rate according to a fluctuation amplitude if the fluctuation amplitude of the real-time input code rate is greater than a preset fluctuation threshold, otherwise, extending the detection period of the average input code rate.

11. A device for controlling a video transcoding code rate, comprising:

an input detection module, configured to periodically detect an average input code rate of a target live stream in the process of transcoding the target live stream;

a code rate calculation module, configured to determine a code rate to be set according to the average input code rate and a preset standard code rate corresponding to the target live stream; and

a real-time transcoding module, configured to transcode the target live stream based on the code rate to be set.

12. The device according to claim 11, wherein the code rate calculation module is configured to:

determine the code rate to be set according to the average input code rate and the preset standard code rate corresponding to the target live stream, if a transcoding duration of the target live stream is greater than a preset duration; or

determine the code rate to be set according to the average input code rate and the preset standard code rate corresponding to the target live stream as well as an input code rate peak of the target live stream within a current period, if the transcoding duration of the target live stream is not greater than the preset duration.

13. The device according to claim 11 or 12, wherein the average input code rate comprises a total average input code rate and a periodic average input code rate within a current period;
the code rate calculation module is configured to:

set the code rate to be set to a maximum value of the preset standard code rate and the total average input code rate, if the periodic average input code rate is less than the preset standard code rate corresponding to the target live stream; or
set the code rate to be set to a product of the periodic average input code rate and a preset code rate control coefficient, if the periodic average input code rate is not less than the preset standard code rate corresponding to the target live stream.

14. A background server, comprising a processor and a memory, wherein the memory stores at least one instruction, at least one program, a code set or an instruction set, and the at least one instruction, the at least one program, the code set or the instruction set is loaded and executed by the processor to perform the method for controlling the video transcoding code rate according to any one of claims 1 to 10.

15. A computer readable storage medium storing at least one instruction, at least one program, a code set or an instruction set, and the at least one instruction, the at least one program, the code set or the instruction set is loaded and executed by a processor to perform the method for controlling the video transcoding code rate according to any one of claims 1 to 10.

Periodically detect an average input code rate of a target live stream in the process of transcoding the target live stream

— 101

Determine a code rate to be set according to the average input code rate and a preset standard code rate corresponding to the target live stream

— 102

Transcode the target live stream based on the code rate to be set

— 103

FIG. 1

Input detection module

— 201

Code rate calculation module

— 202

Real-time transcoding module

— 203

FIG. 2

FIG. 3

## INTERNATIONAL SEARCH REPORT

| International application No. |
|---|
| **PCT/CN2020/074966** |

| A. | CLASSIFICATION OF SUBJECT MATTER |
|---|---|

H04N 21/2343(2011.01)i

According to International Patent Classification (IPC) or to both national classification and IPC

| B. | FIELDS SEARCHED |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, JPTXT, CNKI, IEEE, GOOGLE: 视频, 转码, 编码, 调整, 调节, 控制, 码率, 比特率, 数据量, 周期, 平均, 参考, 分辨率, 帧率, 时长, 带宽, 波动, transcoding, encode, code, bit, rate, adjust, change, period, average, mean, reference, resolution, frame, bandwidth, fluctuation

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107659819 A (CHINANETCENTER TECHNOLOGY CO. LTD.) 02 February 2018 (2018-02-02)<br>    description, paragraphs [0060]-[0107] | 1-15 |
| A | CN 109963169 A (CHINANETCENTER TECHNOLOGY CO., LTD.) 02 July 2019 (2019-07-02)<br>    entire document | 1-15 |
| A | CN 109788316 A (TENCENT TECHNOLOGY SHENZHEN CO., LTD.) 21 May 2019 (2019-05-21)<br>    entire document | 1-15 |
| A | CN 104363463 A (ABLESKY, INC.) 18 February 2015 (2015-02-18)<br>    entire document | 1-15 |
| A | JP 2013123259 A (MITSUBISHI ELECTRIC CORP.) 20 June 2013 (2013-06-20)<br>    entire document | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2020** | **13 August 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/074966**

| Patent document cited in search report | | | Publication date (day/month/year) | Patent family member(s) | | | Publication date (day/month/year) |
|---|---|---|---|---|---|---|---|
| CN | 107659819 | A | 02 February 2018 | CN | 107659819 | B | 25 October 2019 |
| CN | 109963169 | A | 02 July 2019 | None | | | |
| CN | 109788316 | A | 21 May 2019 | None | | | |
| CN | 104363463 | A | 18 February 2015 | CN | 104363463 | B | 18 June 2019 |
| JP | 2013123259 | A | 20 June 2013 | JP | 5524374 | B2 | 18 June 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911088745